# EUROPEAN PATENT SPECIFICATION

(11) **EP 1 359 030 B1**
(45) Date of publication and mention of the grant of the patent: **27.09.2006**
(21) Application number: 02710483.5
(22) Date of filing: 04.02.2002
(51) Int. Cl.: B60C 25/00, B60C 19/00, B60C 25/05, G01M 1/32

(54) **APPARATUS FOR ESTABLISHING CONDITION FOR SECURING TIRE MOUNTED ON RIM AND CONDITION FOR CORRECTING OPTIMAL BALANCE, PROVIDING APPARATUS, AND METHOD FOR SECURING TIRE MOUNYED ON RIM TO VEHICLE**
"VORRICHTUNG ZUR ERMITTLUNG DES BEFESTIGUNGSZUSTANDS EINES FELGENMONTIERTEN REIFENS UND DES ZUSTANDS ZUR OPTIMALEN AUSWUCHTUNG, BEREITSTELLUNG EINER VORRICHTUNG UND EINES VERFAHRENS ZUR BEFESTIGUNG EINES FELGENMONTIERTEN REIFENS AN EINEM FAHRZEUG"
APPAREIL POUR CREER UNE CONDITION DE FIXATION D'UN PNEU MONTE SUR UNE JANTE ET UNE CONDITION D'EQUILIBRAGE OPTIMAL ET PROCEDE DE FIXATION D'UN PNEU MONTE SUR UNE JANTE

(30) Priority: 06.02.2001 JP 2001030237
(43) Date of publication of application: 05.11.2003
(73) Proprietor: Bridgestone Corporation, Tokyo 104-0031 (JP)
(72) Inventor: NARUSE, Yutaka, c/o BRIDGESTONE CORPORATION, Tokyo 104-0031 (JP)
(74) Representative: Whalley, Kevin
(86) International application number: PCT/JP2002/000872
(87) International publication number: WO 2002/062599

(56) References cited:
- EP-A- 0 485 112
- FR-A- 2 763 282
- JP-A- 3 025 009
- JP-A- 6 286 437
- JP-A- 56 090 235
- JP-A- 2000 296 707
- US-A- 4 804 029
- PATENT ABSTRACTS OF JAPAN vol. 1999, no. 14, 22 December 1999 (1999-12-22) -& JP 11 254921 A (BRIDGESTONE CORP), 21 September 1999 (1999-09-21)

## Description

The present invention relates to an apparatus for preparing conditions under which a rim-assembled tire is fixed to a vehicle and correction conditions under which balance is optimized, an apparatus for providing the conditions, and a method of fixing the rim-assembled tire to a vehicle. More particularly, the present invention relates to a method of fixing a rim-assembled tire to a vehicle in a manner according to a customer's driving preference, an apparatus for preparing conditions under which the rim-assembled tire is fixed to a vehicle, and an apparatus for providing the prepared conditions.

Conventionally, for changing tires, tire dealers take steps of rim-assembling, adjusting unbalance, fixing a rim-assembled tire to a vehicle and adjusting alignment. These steps are performed independently rather than in association with each other. Each step is performed in the following manner.

In the step of rim-assembling, a tire and a rim are assembled using a rim-assembling device having function for fitting the tire to the rim. Then air or the like is blown in through a valve to cause a bead of the tire to fit onto the rim. The fitting between the bead and the rim is achieved only by the internal pressure of the filled air or the like. Although the tire shape may sometimes deform depending on the position at which the bead contacts the rim, the tire shape is not controlled.

In the step of adjusting unbalance, the rim-assembled tire is set in a static/dynamic simultaneous measuring instrument ("balancer"), which computes the attached position and the amount of a balance weight for correcting unbalance of the tire and the attached position and the amount of a balance weight are calculated. The balance weight of the computed amount is disposed at the computed position so as to correct unbalance of the rim-assembled tire.

In the step of fixing the tire to a vehicle, the unbalance-corrected rim-assembled tire is fixed to a vehicle by tightening an ordinary fixing nut or a bolt.

In the step of adjusting alignment, alignment is adjusted with respect to a target value, which is a median of target values for adjustment indicated by vehicle manufacturers. Effects of actual weight balance, tire characteristics, support mechanisms of the chassis that cannot be adjusted or the like in each vehicle to which the tire is fixed are not taken into consideration in this process.

Such a conventional method of fixing a rim-assembled tire to a vehicle has a problem in that the tire dealers do not link their techniques to tire characteristics, resulting in that the users cannot fully appreciate the characteristics of their tires.

The present invention is devised to solve the problems described above. An object of the present invention is to provide a method of fixing a rim-assembled tire to a vehicle, an apparatus for preparing conditions under which the rim-assembled tire is fixed to the vehicle and correction conditions under which balance is optimized, and an apparatus for providing the conditions, altogether allowing finer adjustment and maintenance in replacing tires, by linking the tire dealers' techniques to tire characteristics and linking the information to operation and to devices used in operation.

To achieve the above object, an apparatus for preparing conditions at tire-assembling for a vehicle comprises storage means for storing information about a plurality of tires and wheels; display means for displaying the information about the plurality of tires and wheels stored in the storage means; input means for inputting information for selecting a tire and a wheel from among the tires and wheels displayed on the display means and information about a customer's driving preference; and preparing means for preparing rim-assembling conditions relating to fit between the selected tire and the wheel at rim-assembling of the selected tire and the wheel; unbalance-adjusting conditions relating to a weight for correcting unbalance of the rim-assembled tire at unbalance-adjusting of the rim-assembled tire; fix-conditions relating to a process at which the rim-assembled tire is fixed to the vehicle; and alignment-conditions relating to alignment of the vehicle and the vehicle fixed rim-assembled tire, based on the information for selecting a tire and a wheel and the information about a customer's driving preference which are input from the input means.

An apparatus for providing conditions at tire-assembling for a vehicle of the present invention comprises storage means for storing information about a plurality of tires and wheels; display means for displaying the information about the plurality of tires and wheels stored in the storage means; input means for inputting information used for selecting a tire and a wheel from among the tires and wheels displayed on the display means and information about a customer's driving preference; and preparing means for preparing rim-assembling conditions relating to fit between the selected tire and the wheel at rim-assembling of the selected tire and the wheel; unbalance-adjusting conditions relating to a weight for correcting unbalance of the rim-assembled tire at unbalance-adjusting of the rim-assembled tire; fix-conditions relating to a process at which the rim-assembled tire is fixed to the vehicle; and alignment-conditions relating to alignment of the vehicle and the vehicle fixed rim-assembled tire, based on the information for selecting a tire and a wheel and the information about a customer's driving preference which are input from the input means and providing the obtained conditions.

A method of tire-assembling for a vehicle of the present invention comprises the steps of: displaying information about a plurality of tires and wheels on an information terminal to allow a customer to select a tire and a wheel, and obtaining the customer's driving preference; obtaining: rim-assembling conditions relating to fit between the selected tire and the wheel at rim-assembling of the selected tire and the wheel; unbalance-adjusting conditions relating to a weight for correcting unbalance of the rim-assembled tire at unbalance-adjusting of the rim-assembled tire; fix-conditions relating to a process at which the rim-assembled tire is fixed to the vehicle; and alignment-conditions relating to alignment of the vehicle and the vehicle fixed rim-assembled tire, based on the selected tire and wheel and the obtained customer's driving preference, and assembling a tire and a wheel in accordance with the rim-assembling conditions, adjusting unbalance of the rim-assembled tire in accordance with the unbalance-adjusting conditions, fixing the unbalance-corrected rim-assembled tire to the vehicle in accordance with the fix-conditions and adjusting alignment of the vehicle in accordance with the alignment-conditions.

In the apparatus for preparing the conditions at tire-assembling for a vehicle, the information about the plurality of tires and wheels stored in the storage means is displayed on the display means. The information is used to select a tire and a wheel from among the tires and the wheels displayed on the display means and the information about a customer's driving preference is input from the input means. The preparing means then prepares, for the selected tire and the wheel, conditions under which a tire and a rim is assembled (rim-assembling conditions), conditions under which unbalance is adjusted (unbalance-adjusting conditions), conditions under which a rim-assembled tire is fixed to a vehicle (fix-conditions) and conditions under which alignment is adjusted alignment conditions based on the information input from the input means.

The apparatus for providing the conditions at tire-assembling for a vehicle obtains, for the selected tire and the wheel, the conditions of rim-assembling, the conditions of adjusting unbalance, the conditions of fixing a tire to a vehicle and the conditions of adjusting alignment based on the information input from the input means, and provides the obtained conditions.

The present invention thus prepares the conditions of rim-assembling, the conditions of adjusting unbalance, the conditions of fixing a tire to a vehicle and the conditions of adjusting alignment based on the information about the customer's driving preference or provides the prepared conditions. The conditions at tire-assembling for a vehicle can therefore be prepared or provided, with matching the customer's driving preference.

In the method of tire-assembling for a vehicle of the present invention, the conditions of rim-assembling, the conditions of adjusting unbalance, the conditions of fixing a tire to a vehicle and the conditions of adjusting alignment can be obtained for the tire and the wheel selected by the customer based on the information about the customer's driving preference. These conditions can be obtained by the apparatus for preparing the conditions of fixing a rim-assembled tire to a vehicle and the correction conditions of optimizing the balance or the apparatus for providing the prepared conditions. Then the tire and the rim are assembled in accordance with the obtained conditions of rim-assembling, the unbalance of the rim-assembled tire is adjusted in accordance with the conditions of adjusting unbalance, unbalance-corrected rim-assembled tire is fixed to the vehicle in accordance with the conditions of fixing a tire to a vehicle, and a vehicle condition is measured and then alignment (e.g., a toe angle) of the vehicle is adjusted in accordance with the conditions of adjusting alignment.

As described above, the present invention obtains the conditions of rim-assembling, the conditions of unbalance adjusting, the conditions of fixing a tire to a vehicle and the conditions of adjusting alignment for the tire and the wheel selected by the customer based on the information about the customer's driving preference, and fixes the rim-assembled tire to the vehicle based on the obtained conditions. Consequently, the rim-assembled tire can be fixed to the vehicle in accordance with the customer's driving preference.

The fitting between the tire and the rim can be further enhanced by using a device for guiding and helping the fitting between the tire and the rim in addition to the conditions of rim-assembling. Because a reliable rim-assembly ensures a stable shape of the tire formed on the rim, the rim-assembling conditions also include inflate-conditions under which the tire is repeatedly inflated and deflated so that the fitting between the tire and the rim can be enhanced. Using inflating conditions vary the degree of fitting between the tire and the rim and thereby change the tire shape at the time of rim-assembling. Accordingly, the characteristics of the vehicle, such as riding comfort and handling, can be changed within the basic characteristics of the tire.

The unbalance adjusting conditions may include a ground contact length of the rim-assembled tire or information used for computing the ground contact length. The ground contact length is used for providing the balance weight with a part of which being distributed so that the unbalance that occurs when the rim-assembled tire with the balance weight for correcting the unbalance contacts the ground becomes smaller.

Vibration or the like of the vehicle during travelling can be reduced in the following manner. In the step of adjusting unbalance, the rim-assembled tire is set in a static/dynamic simultaneous measuring instrument and made to rotate. Then the amount of the unbalance-correction at an end surface and an inner surface of the rim and the position at which a balance weight for correcting the amount of unbalance will be provided on the circumferential end surface of the rim are measured. Next the balance weight is provided with a part of which being distributed so that the unbalance that occurs when the rim-assembled tire with the balance weight having weight corresponding to the amount of unbalance-correction at the determined position on the circumferential end surface of the rim contacts the ground becomes smaller.

Fig. 1 is a block diagram illustrating a system for providing conditions of fixing a rim-assembled tire in an embodiment of the present invention.

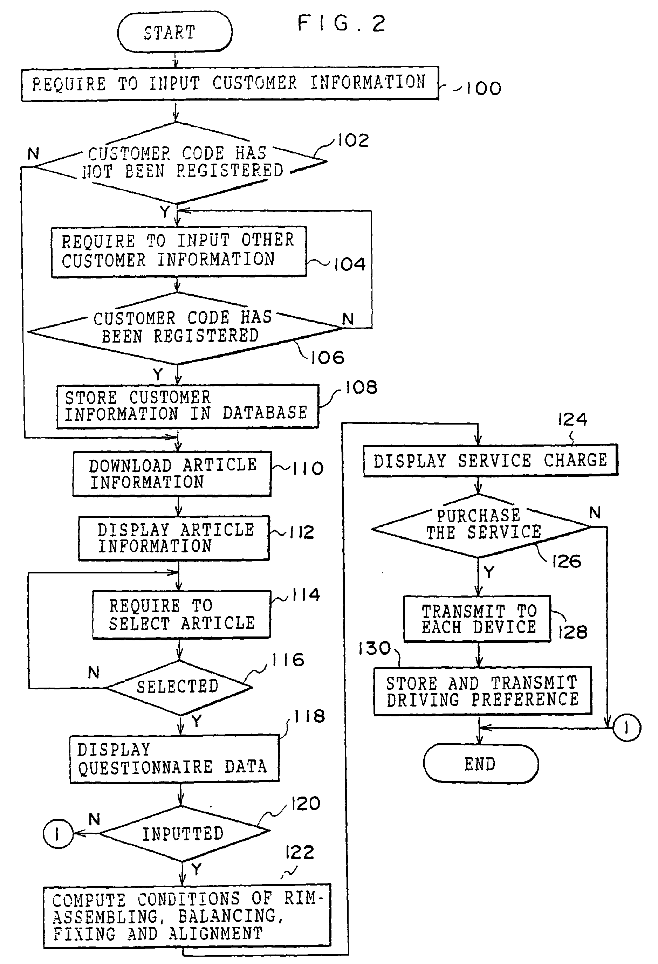

Fig. 2 is a flowchart illustrating a routine for providing conditions of fixing a tire at a client shown in Fig. 1.

Fig. 3 is a perspective view showing equipment in a tire dealer of the present embodiment.

Fig. 4 is an explanatory view illustrating positions at which distributed portions of a balance weight for correcting unbalance are provided in the present embodiment.

Fig. 5 is a cross-sectional view showing a rim-assembling device equipped with an air inflator used in the present embodiment.

Fig. 6 is a piping diagram illustrating a control means for controlling compressed air supply to an air-filling means and an elevating means.

Fig. 7 is a diagram illustrating an operational step of filling a tire with internal pressure.

Fig. 8 is a diagram illustrating an operational step of filling a tire with internal pressure.

Fig. 9 is a diagram illustrating an operational step of filling a tire with internal pressure.

Fig. 10 is a diagram illustrating an operational step of filling a tire with internal pressure.

Fig. 11 is a diagram illustrating an operational step of filling a tire with internal pressure.

An embodiment of the present invention will be described with reference to drawings. In the present embodiment, a client (i.e., an information terminal such as a personal computer) installed in a tire dealer first acquires information about a plurality of tires and wheels from a database installed in an information center. The client also acquires information about a customer's driving preference. Based on the acquired information, the client obtains conditions of rim-assembling, conditions of adjusting unbalance, conditions of fixing a rim-assembled tire to a vehicle and conditions of adjusting alignment. A tire and a rim are assembled in accordance with these conditions and the rim-assembled tire (i.e., an assembled tire and rim unit) is then fixed to a vehicle.

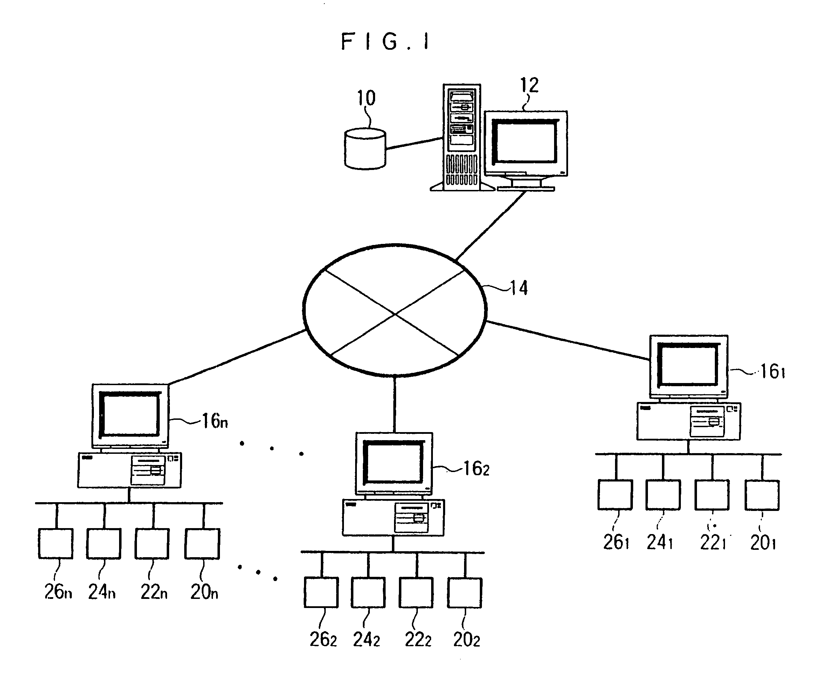

As shown in Fig. 1, a system for providing information about fixing of a rim-assembled tire in the present embodiment comprises a database 10 which accumulates information about a plurality of tires and wheels, and a server 12, serving as a database managing device, which for example updates and retrieves the database 10. The database 10 and the server 12 are installed in an information center such as a tire manufacturer.

The information about tires and wheels stored in the database 10 includes data of suitable size of a tire and a wheel for each vehicle, toughness of a tire for each tire size, ranking for each wheel width, tire and wheel matching, and tire and wheel catalogue data, that is, article sales and price information. The database in the information center may also accumulate questionnaire data for obtaining customers' driving preference, which can be updated to reflect customer information obtained from the tire dealers.

The server 12 is connected to a network 14 (e.g., the Internet) via a connecting device such as a modem, a router or a TA (i.e., terminal adapter). Each of the clients 16₁, 16₂, ... and 16ₙ, which is provided in a tire dealer, is connected to the network 14 via the connecting device mentioned above. Each client has a database for customer management, a keyboard used as an input means for inputting, for example, information for selecting articles, and a CRT display device which displays article information, questionnaire data, and the like. The database for customer management stores information such as customer information, vehicle information about vehicles owned by the customers, and tire information about tires fixed to the vehicles, corresponding to customer management codes.

The customer information includes for example address, name, age of a customer of the tire dealer (i.e., a vehicle owner). The tire information relates to tires of customers' vehicles such as tire design, tire size, wheel design and wheel size. The vehicle information relates to customers' vehicles such as vehicle type, model year and axial load. Each client can access the server 12 by inputting an ID and a password that the client registered in advance.

Each tire dealer is equipped with a rim assembling device 20₁, 20₂, ... or 20ₙ, a wheel balancer 22₁, 22₂, ... or 22ₙ, a tire fixing device 24₁, 24₂, ... or 24ₙ, and an alignment adjusting device 26₁, 26₂, ... or 26ₙ. The rim assembling device has an air inflator (i.e., internal pressure filling device) to ensure an optimum fitting between a tire and a rim. The wheel balancer is a static/dynamic simultaneous unbalance correcting device used for correcting unbalance of a rim-assembled tire. The tire fixing device is used to fix a set of rim-assembled tires to a vehicle using a tire excitation device as an auxiliary device. The alignment adjusting device is used to determine vehicle conditions, adjust a toe angle so as to be a suitable value in accordance with the vehicle conditions and tire conditions, ensure stability of the tires, and minimize taper wear of the tires. The rim assembling device, the wheel balancer, the tire fixing device and the alignment adjusting device each has a computer that is connected to a client via a LAN.

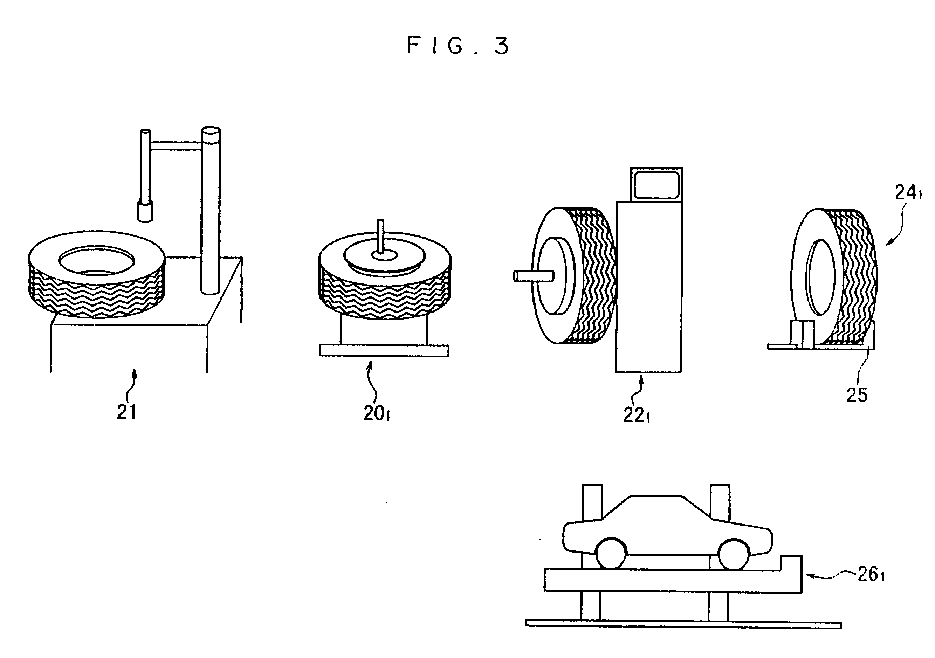

In addition to these devices 20₁, 22₁, 24₁, 26₁, the tire dealer has a tire changer 21, a centering tool 25 used at the time of fixing a set of rim-assembled tires to a vehicle, and the like as shown in Fig 3. Other tire dealers have similar facilities.

A process routine for providing conditions of rim-assembling, conditions of adjusting unbalance, conditions of fixing a rim-assembled tire to a vehicle and conditions of adjusting alignment, by a client, to an operator in each tire dealer is as follows.

At step 100, the operator is required to input customer information such as a customer code, address, name and age. when the operator input some of the customer information by operating a keyboard, a customer database is retrieved at step 102 to determine whether the identical customer information (i.e., the identical customer code) has already been registered. If the customer code has not been registered, the operator is required to input the rest of the customer information, tire information and vehicle information at step 104.

The operator will be required to input above information repeatedly until it is determined at step 106 that input of all the customer information, tire information and vehicle information has completed. Once the input of all the information is complete, a new customer code is set in the customer database at step 108. The customer information, the tire information and the vehicle information is registered in correspondence with the customer code. If it is determined that the customer code has already been registered in step 102, the process advances to step 110 since the customer information, the tire information and the vehicle information has been registered at the time of customer's previous visit.

The customer information, the tire information and the vehicle information are recorded on a vehicle inspection certificate. The operator can input such information by referring to or by scanning the certificate. A previously-registered customer may be given a recording medium such as a magnetic card or a CD-R which carries the customer information, the tire information and the vehicle information to allow the operator to read the information out therefrom.

Once input of the customer information, the tire information and the vehicle information is complete, the operator is required to input an ID and a password at step 110. When the ID and the password are input, the client automatically accesses the server 12 in the information center to download article information (i.e., article sales and price information) such as tire and wheel catalogue data, information of suitable size of a tire and a wheel for each vehicle, and information of tire and wheel matching data from the database 10. The downloaded information is displayed on a display device such as a CRT at step 112. The information of suitable size of a tire and a wheel for each vehicle is displayed in a table in which the vehicle information and the size of the tire and the wheel are associated with each other.

Article information in accordance with the input vehicle information or the tire information is extracted and displayed on the CRT along with price information. That is, the article sales information including a picture of a wheel and a picture of a tire each having a design in accordance with the vehicle information or the tire information is displayed along with the article price information.

If a single screen is too small to display all the pictures of the wheels and the tires, these pictures can be confirmed by scrolling the screen. To display many pictures of the wheels and the tires, these pictures may be displayed by being automatically scrolled at predetermined intervals. Automatic scrolling helps the customer confirm all the pictures without using a mouse.

If questionnaire data has been stored in the server, the data is also downloaded at the same time.

At next step 114, the customer is required to select article(s). The customer inputs information for selecting articles to select the articles by clicking the mouse on a picture of a tire or a wheel he or she selects while confirming the article sales and price information displayed on the CRT. The customer may select only one of the tire and the wheel.

When it is determined that an article is selected at step 116, information about the customer's driving preference is obtained at next steps 118 and 120. At step 118, a questionnaire consisting of five items listed below is displayed on the display device and the customer is required to check the boxes in accordance with his or her driving preference, thus information about the customer's driving preference is obtained.

The items 1 to 3 concerns determination of inflating conditions of the air inflator. The item 4 concerns the conditions for adjusting unbalance. The item 5 concerns the conditions for adjusting alignment.
1. Riding comfort vs. stability
   □ I prefer stability even if riding comfort is sacrificed
   □ I prefer riding comfort even if stability is sacrificed
2. Riding comfort vs. fittingness
   □ I prefer fittingness even if riding comfort is sacrificed
   □ I prefer riding comfort even if fittingness is sacrificed
3. Riding comfort vs. stability while driving on express ways
   □ I prefer stability while driving on express ways even if riding comfort is sacrificed
   □ I prefer riding comfort even if stability while driving on express ways is sacrificed
4. Vibration while driving on express ways
   □ I dislike car vibrations
   □ Car vibrations do not bother me
5. Grounding while driving on express ways
   □ I prefer changing is small
   □ Poor groundings do not bother me

At next step 120, it is determined whether or not the customer has input the information about his or her driving preference. If the customer's driving preference has not been input, the routine stops. If customer's driving preference has been input (i.e., information about the customer's driving preference has been obtained), conditions of rim-assembling, conditions of adjusting unbalance, conditions of fixing a rim-assembling tire to a vehicle and conditions of adjusting alignment are computed at step 122. Then these adjustments are carried out in accordance with these conditions and a display device displays a charge for fixing a rim-assembled tire to a vehicle at next step 124.

After confirming the charge, the customer decides whether or not to purchase the service of fixing a rim-assembled tire to a vehicle the tire dealer provides and inputs data indicating it accordingly. If it is determined that the customer decides to purchase the service at step 126, conditions of fixing the rim-assembled tire to the vehicle is presented by transmitting the above-mentioned conditions to each computer that belongs to the rim-assembling device, the wheel balancer, the tire assembling device and the alignment adjusting device and are connected to the client.

The conditions of fixing the rim-assembled tire to the vehicle may be presented to operators of the rim-assembling device, the wheel balancer, the tire assembling device and the alignment adjusting device by being outputted on a recording medium such as paper, FD and the like. The customer may determine not to purchase the service and bring the routine to an end.

The information about the driving preference obtained from the customer is then stored in the customer database in correspondence with the customer code and transmitted to the server in the information center at next step 130. The server determines the tendency in the customer's driving preference by for example taking statistics and utilizes the data for developing a new tire or updating the questionnaire data.

The steps of rim-assembling, adjusting unbalance, fixing a rim-assembled tire to a vehicle and adjusting alignment will be described below.

### (1) Rim-assembling step

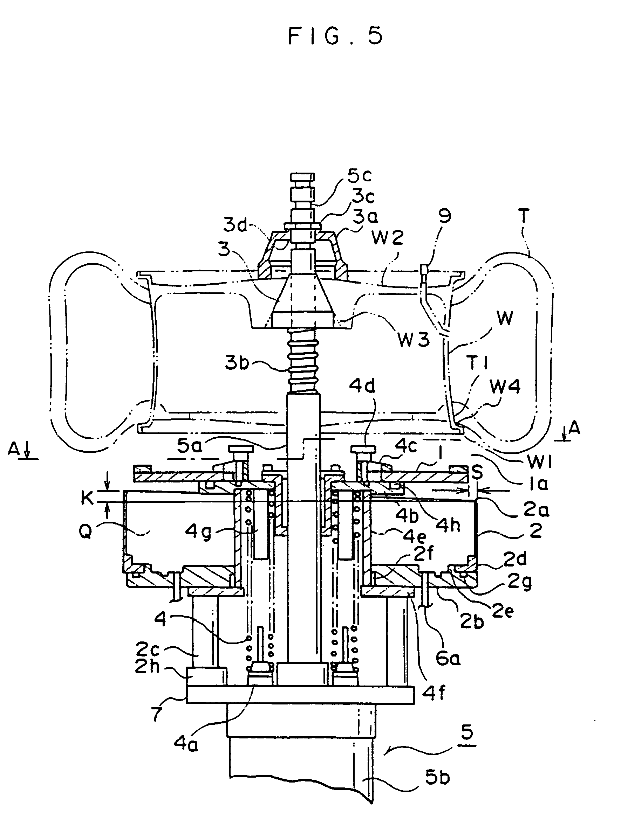

An apparatus that a rim-assembling device manufactured by Hoffman ("Hoffman type rim-assembling device") is combined with an air inflator is used for rim-assembling. The rim-assembling device has a device for controlling air inflation under selected inflation conditions after bead-fitting. As shown in Fig. 5, the rim-assembling device has a support 1 with an annular seat 1a provided near an outer end of the upper surface of the support 1. The seat 1a supports, on an upper surface thereof, a recurbed outer end W1 of a lower flange of a wheel rim W of the rim-assembled tire and seals the air pressure. The support 1 is detachably fixed on a base plate 4b by a clamp 4c. The base plate 4b is urged upward by a spring 4. Although the support 1 is urged upward in a normal state by the spring 4, the support 1 moves downward when external force larger than the urging force of the spring 4 is applied. That is, the support 1 can be curved upward and downward. Numeral 2 denotes an outer cylinder whose circumference 2a is tilted by a tilt-amount of K with respect to a vertical axis. The outer cylinder 2 surrounds the support 1 with a circumference interval S between the outer circumference of the support 1 and the inner circumference of the circumference 2a.

A center guide 3, urged upward by a spring 3b, loosely fits into a rod 5 which forms a part of an elevating means 5. A wheel rim W is mounted on the center guide 3 by the rod 5a passing through the hub hole W3 from a top of the rod 5a. The hub hole W3 then engages with a tapered portion formed at an upper surface of the center guide 3 so that the wheel rim W is aligned to the center due to the tapering effect. A cap 3a is fitted onto the rod 5a from a top of the rod 5a so that a disk W2 is held between the cap 3a and the center guide 3. Then a cylinder 5b, which is a part of the elevating means 5, is operated to pull the rod 5a downward. The recurbed outer end W1 of the lower flange of the wheel rim W then abuts the seat 1a to move the support 1a downward together with the wheel rim W against the urging force of the spring 4. Although the outer cylinder 2 itself stays unmoved during the downward movement of the support 1, the circumference 2a relatively pushes a lower side wall of a tire T at a bead side thereof upward while tightly sealing the lower side wall with contacting the lower side wall by the support 1 moving downward. As a result, a space is formed between a lower bead portion T1 and a lower bead seat W4. Through the space, compressed air is blown into the tire T from a pipe 6a that forms a part of an air-filling means. At the same time, compressed air is also blown in from a valve inlet 9 of the wheel rim W. Alternatively, the compressed air may be blown in only from the valve inlet 9 rather than through both the space and the valve inlet 9.

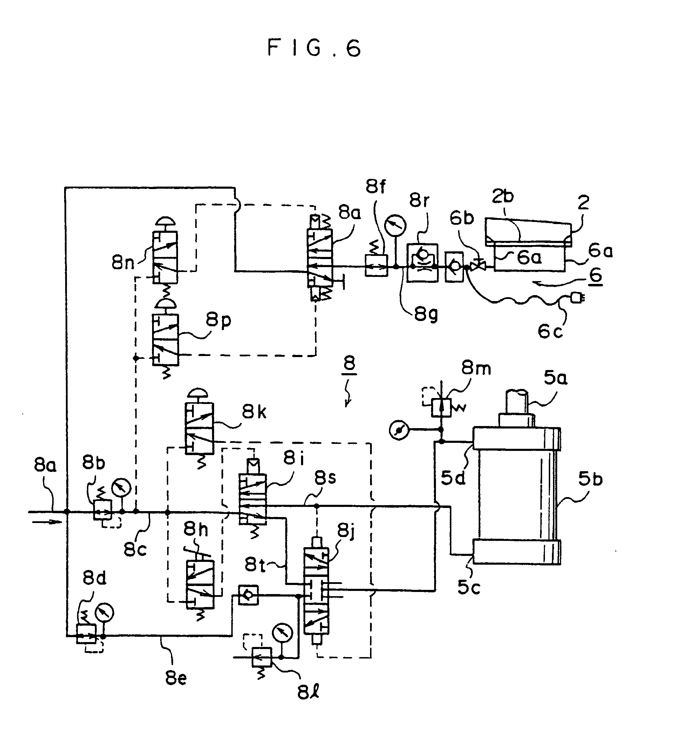

Operation of a control means 8 which controls a supply of the compressed air to the air-filling means 6 and to the elevating means 5 is as follows. In Fig. 6, air is supplied to a pipe 8a from an air source at a air pressure of 0.68 MPa (7 Kgf/cm²), normally. The pipe 8a is branched into three directions: pipes 8c, 8e and 8g. Pressure in the pipe 8c is reduced to for example about 0.49 to 0.54 MPa (5 to 5.5 Kgf/cm²) by a pressure-reducing valve 8b. The pipe 8c is a high-pressure air source which activates the cylinder 5b. Pressure in the pipe 8e is reduced to for example about 0.15 MPa (1.5 Kgf/cm²) by a pressure-reducing valve 8d. The pipe 8e is a low-pressure air source which activates the cylinder 5b. Pressure in the pipe 8g is reduced to for example about 0.39 MPa (4 Kgf/cm²) by a pressure-reducing valve 8f. The pipe 8g supplies compressed air to the pipe 6a, which forms a part of the air-filling means 6, and to a supply inlet 6c via a fluid flow throttle valve 8r at a flow rate of 100L/min. or less.

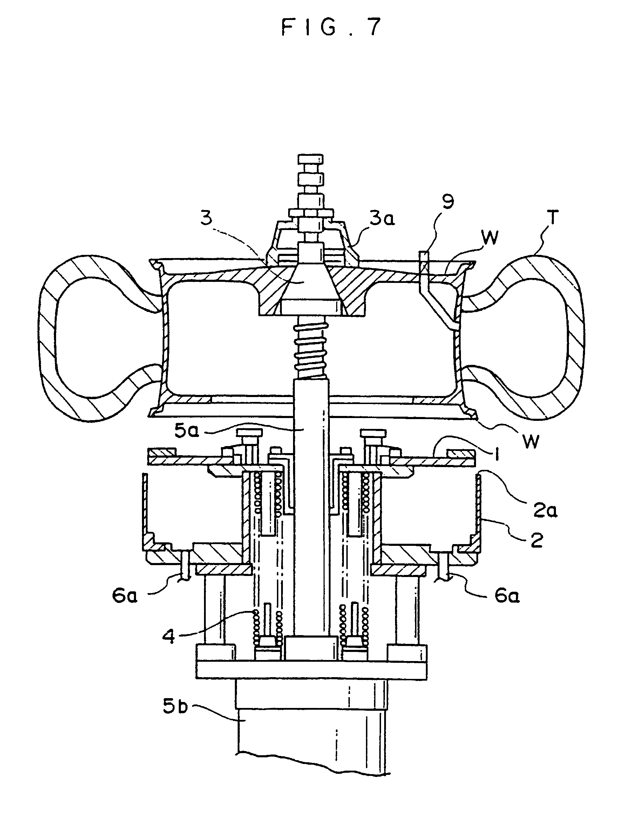

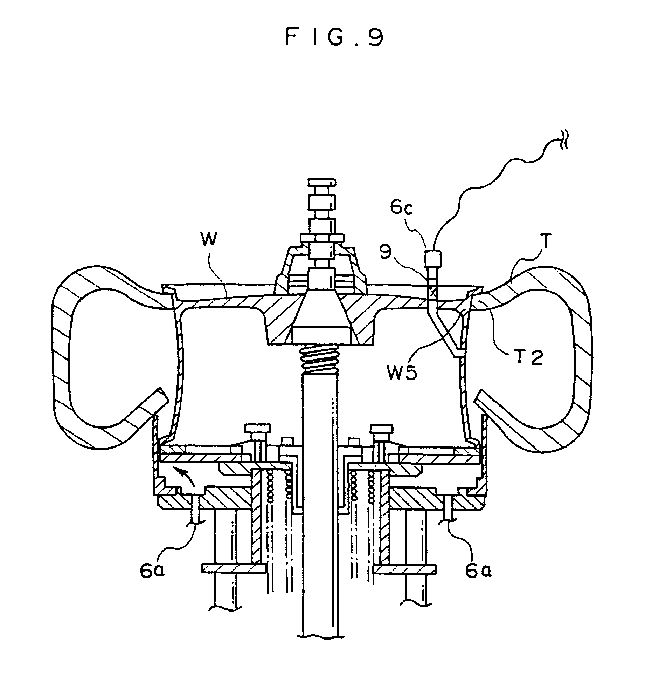

A procedure of filling a tire with internal pressure will be described below with reference to Figs. 7-11 illustrating operating steps of the procedure along with Fig. 6. When an operator pushes a foot switch 8h (see Fig. 6) to switch a changeover valve 8i, high-pressure air flows into a pipe 8s and is then to an air port 5c of the cylinder 5b. A changeover valve 8j is also switched to cause the cylinder 5b at an air port 5d side thereof to open to air. The rod 5a is now in a protruded position as shown in Fig. 7. In this state, a rim-assembled tire (i.e., a pneumatic tire T simply fitted onto the wheel rim W) is mounted onto the center guide 3 and then aligned to the center. Then a cap 3a is fitted into the rod 5a to hold the wheel rim W.

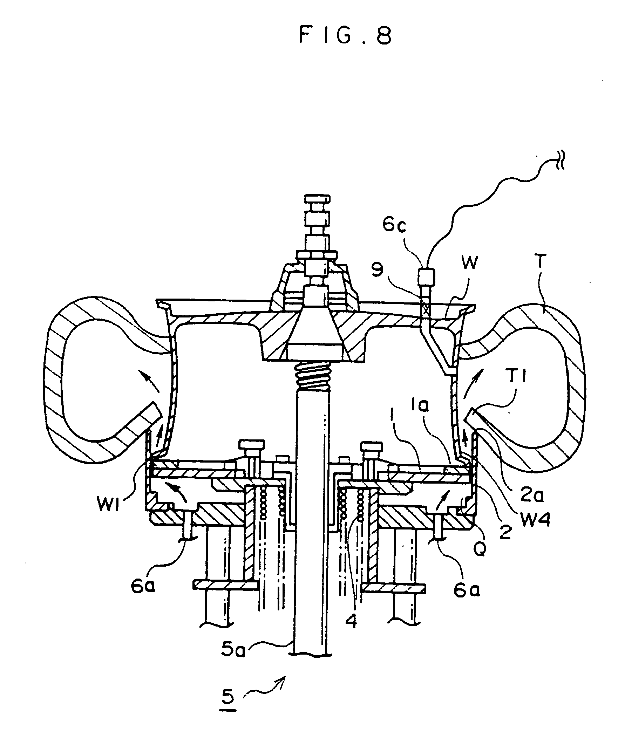

When the operator stops pushing the foot switch 8h, the changeover valve 8i is switched to cause high-pressure air to flow into the pipe 8t. Because the changeover valve 8j stays unswitched, however, the high-pressure air is fed to the cylinder 5b at the air port 5d side thereof and the air port 5e side is caused to open to air. The high-pressure air is supplied to cause the cylinder 5b, which forms the elevating means 5, to move downward and the rim-assembled tire thereby moves downward as shown in Fig. 8. As a result, the recurbed outer end W1 of the lower flange of the wheel rim W abuts an upper surface of the seat 1a to move the support 1a downward together with the wheel rim W against the urging force of the spring 4. The circumference 2a relatively pushes a lower side wall upward while tightly sealing the lower side wall and a space is then formed between the bead portion T1 and the lower bead seat W4. When the operator pushes a button switch 8n while pressing the supply inlet 6c against the valve inlet 9, the changeover valve 8q is switched to supply compressed air into the pipe 6a and into the supply inlet 6c while the button switch 8n is being pressed. Via the space, and also via the valve inlet 9, the tire T is filled with internal pressure as shown by arrows in Fig. 8. Therefore an upper bead portion T2 of the tire T then begins fitting gradually with an upper bead seat W5 along the entire circumference thereof to achieve fitting between the bead portion T2 and the bead seat W5.

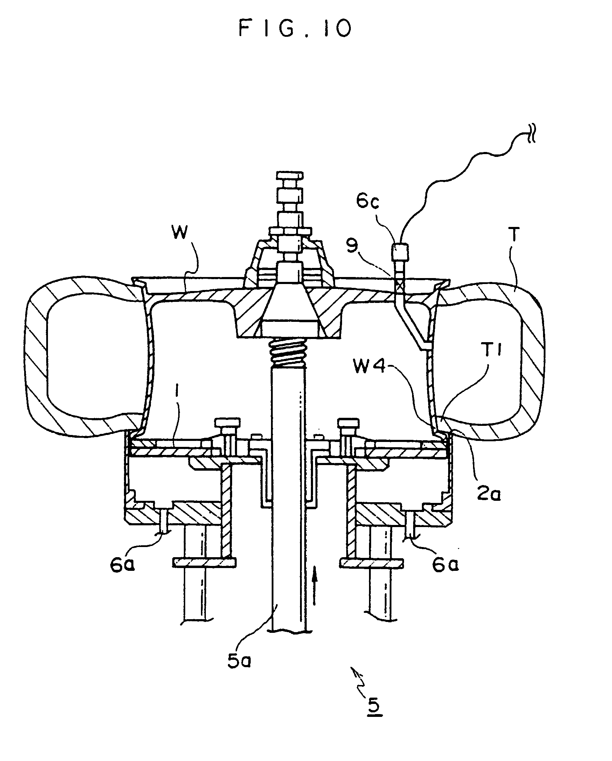

When the operator pushes a button switch 8k while filling of the tire T with internal pressure is still continued, the changeover valve 8j is switched to feed low-pressure air from the low-pressure pipe 8e to the cylinder 5b at the air port 5d side thereof. The air pressure for moving the cylinder 5b downward then turns to low. The upward force caused by the internal pressure of the tire T therefore becomes larger than the force that causes the cylinder 5b to move the rim-assembled tire down as shown in Fig. 10. As a result, the upward force relatively moves the support 1 upward and a the lower bead portion T1 of the tire T begins to fit with the lower bead seat W4 gradually. Tilted circumference 2a allows a precise fitting between the bead portion T1 and the bead seat W4 because fitting of the bead portion T1 and the bead seat W4 in the entire circumference takes place gradually rather than at once. Even after the fitting between the bead portion T1 and the bead seat W4 is complete and no more space through which the compressed air is filled is left therebetween, the internal pressure is still supplied from the valve inlet 9. The internal pressure causes the bead portion T1 to expand outward. The force that causes the lower bead portion T1 and the bead seat W4 to fit with each other is continuously applied and an effect of evenly close contact works effectively therebetween until the compressed air supply is stopped. After the bead portions T1 and T2 respectively makes uniform and tight contact with the bead seats W4 and W5, respectively, at a low fluid rate (e.g., 30 L/min.) and the fitting is complete, when the internal pressure of the tire T becomes a predetermined normalized pressure in accordance with the size of the tire, the operator ceases pushing the button switches 8n and 8k to switch the changeover valve 8q to stop the air supply to the pipe 6a and the supply inlet 6c. Then the operator removes the supply inlet 6c from the valve opening 9. As described above, the control means mainly comprises the pressure-reducing valves 8b, 8d and 8f, the button switches 8n and 8p, the foot switch 8h, and the changeover valves 8g, 8i and 8j. The air-filling means 6 comprises the pipe 6a, the valve 6b and the supply inlet 6c.

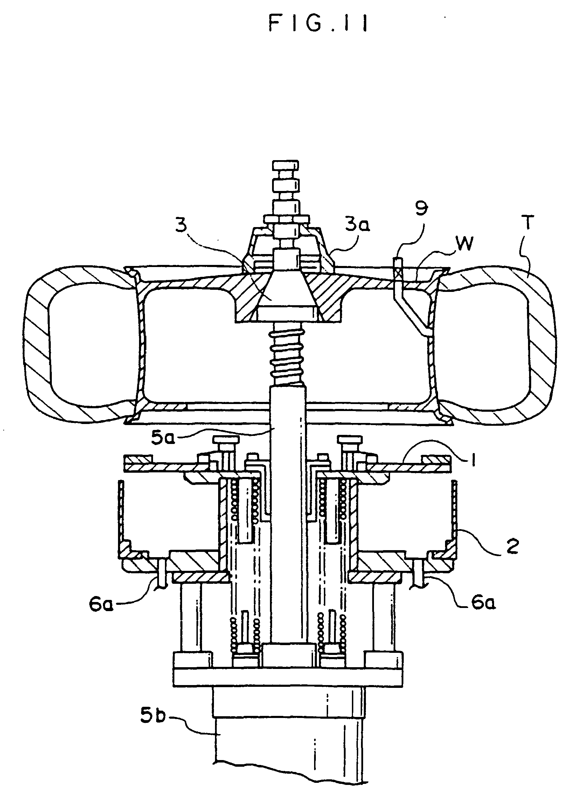

When the operator pushes the foot switch 8h to switch the changeover valves 8i and 8j, the air supply to the cylinder 5b is caused to turn upward and the rim-assembled tire is raised to a position apart from the support 1 as shown in Fig. 11. The series of operations ends here. Then the cap 3a is removed and the rim-assembled tire with internal pressure filled therein is carried upward of the rod 5a and removed.

If the tire T is filled with internal pressure only through the supply inlet 6c while the supply inlet 6c is pressed against the valve opening 9, it is sufficient to close the valve 6b (see Fig. 6) first. Other procedures are the same as those in the above description.

The characteristics of the tire can be optimized in accordance with the customer's driving preference by changing the degree of fitting between the tire and the rim, which will be achieved by controlling the internal pressure of the tire. The internal pressure of the tire is controlled by filling an air to the tire with inflating the tire with varying air pressure or with repeating inflation and deflation for predetermined times in accordance with inflating conditions.

### (2) Unbalance adjusting step

A static/dynamic simultaneous unbalance measuring instrument, which measures an amount of static unbalance-correction and an amount of dynamic unbalance-correction simultaneously, is used for adjusting unbalance. The static/dynamic simultaneous unbalance measuring instrument comprises a rotation axis for rotating a rim-assembled tire and a display device for displaying measured values and the like. The static/dynamic simultaneous unbalance measuring instrument computes the amount of unbalance-correction and determines the position at which a balance weight for correcting the unbalance is provided while the rim-assembled tire does not contact the ground. Accordingly, if the amount of unbalance-correction is too large, the tire will become unbalanced due to the effect of ground-contact during running even though the unbalance of the tire has been corrected by providing a balance weight in accordance with the display of the static/dynamic simultaneous unbalance measuring instrument. The unbalance is therefore adjusted by taking conditions of the tire when contacting the ground into consideration in the unbalance adjusting step.

A rim-assembled tire is first set in the static/dynamic simultaneous unbalance measuring instrument and rotated. The amount of the unbalance-correction and the position at which a balance weight for correcting the amount of unbalance will be provided on the circumferential end surface of the rim are measured. A type of a balance weight in accordance with the amount of unbalance-correction is then determined and displayed on the display device. If the weight of the balance weight is smaller than or equal to a predetermined value (10g for example), only small unbalance will be caused when the tire contacts the ground. In this case, the balance weight is fixed at a position on the circumferential end surface of the rim, displayed by the static/dynamic simultaneous unbalance measuring instrument.

If the weight of the balance weight is greater than the predetermined value and the balance weight is provided such that the weight is concentrated in one area, the unbalance caused when the tire contacts the ground becomes larger. To avoid this problem, the balance weight may be divided. That is, the ground contact length of the tire on the road surface and the length of the balance weight are compared and, if the ground length and the length of the balance weight are in a relationship in which unbalance caused when the tire contacts the ground becomes large, the balance weight is divided into pieces and provided such that the weight of the balance weight becomes distributed. The ground contact length of the tire can be computed by the client or the server and then provided to the static/dynamic simultaneous unbalance measuring instrument, or computed by the static/dynamic simultaneous unbalance measuring instrument using provided information for computing the ground contact length.

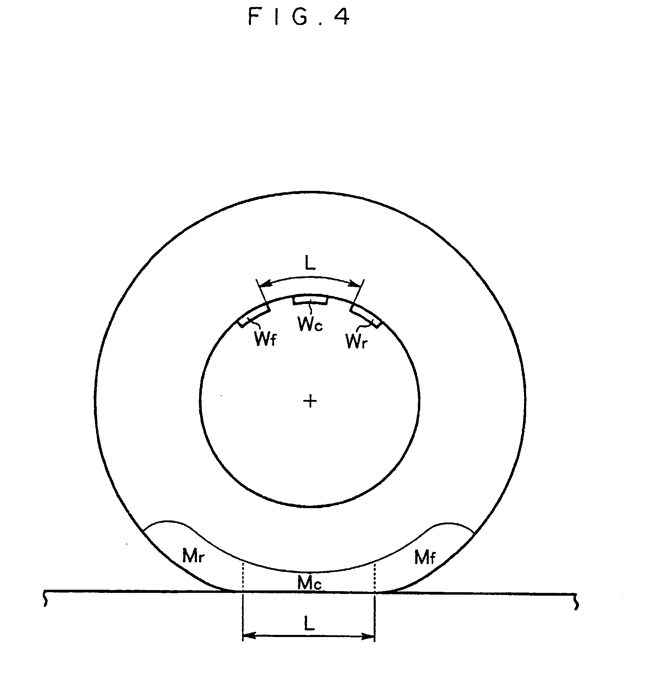

A method of dividing the balance weight will now be described. As shown in Fig. 4, when the center of the unbalance portion to be corrected of the rim-assembled tire is positioned at the center of the grounded portion of the tire, the unbalance portion can be divided to three parts: a part whose weight is Mc corresponds to the grounded portion, and parts whose weights are Mf and Mr correspond to the both sides of the grounded portion. Unbalance at the part of weight Mc corresponding to the ground portion will be eliminated when the tire contacts the ground. If the balance weight having the weight measured by the static/dynamic simultaneous unbalance measuring instrument is attached concentratedly in the single area, unbalance corresponding to the amount of eliminated unbalance will be generated. To avoid this, the balance weight will be distributed so as to reduce the amount of this unbalance.

When the center of the unbalance portion to be corrected of the rim-assembled tire is positioned at the center of the grounded portion of the tire, the unbalance is corrected in the following manner. The balance weight is divided into three portions whose weights are Wc, Wf and Wr for correcting the unbalance portions of weights Mc, Mf and Mr, respectively. The balance weight of weight Wc is fixed such that the center thereof agrees with the position to correct the unbalance, determined by the static/dynamic simultaneous unbalance measuring instrument. The balance weight whose weight is Wᵣ, for correcting the unbalance portion whose weight is Mᵣ, is attached to a front region in a region corresponding to the grounded portion of the tire, the region corresponding to the grounded portion of the tire having the same length of the grounded length L and having a center thereof at said position to correct the unbalance. Further, the balance weight whose weight is Wf, for correcting the unbalance portion whose weight is Mf, is attached to a rear region in the region corresponding to the grounded portion of the tire. Each balance weight is attached to contact an end portion of the region corresponding to the grounded portion of the tire as shown in Fig. 4. Thus, although grounding of the unbalance portion will cause unbalance, the unbalance at the portions which do not ground (i.e., the portions having weights Mf, Mr) can be corrected by the balance weights whose weights are Wf and Wr.

If the weight of the balance weight per unit length is constant and the weight Mc, Mf, Mr, Wc, Wf and Wr are identical, it is determined whether the one third of the total length d of the balance weight (d/3) is shorter than the ground length L (i.e., the total length d of the balance weight is shorter than the three times of the ground length L). If d/3 is shorter than L, the balance weight is divided into three equal pieces. One of the divided balance weights is fixed such that the center thereof agrees with the position to correct the unbalance, determined by the static/dynamic simultaneous unbalance measuring instrument. The other two of the divided balance weights are fixed such that an end portion of each balance weight agrees with a position apart from the unbalance correcting position measured by the unbalance measuring instrument in a clockwise or a counterclockwise direction by the ground length L (i.e., each of the center of the other two balance weights is provided at positions apart from the fixing position computed by the static/dynamic simultaneous unbalance measuring instrument by (L/2)+(d/6)).

When d/3 is longer than the ground length, the balance weight is attached so as to be distributed in the rim circumference direction. Because unbalance caused when the tire contacts the ground is small in this case, the balance weight is provided at a position on the circumferential end surface of the rim displayed by the static/dynamic simultaneous unbalance measuring instrument. If the total length d of the balance weight is greater than one third of the circumferential length of the rim, the effect of the balance weight is canceled due to centrifugal force. In this case, the width of the balance weight is doubled and the total length of the balance weight is reduced to half.

Preferably, the positions at which the distributed balance weights are provided are automatically displayed by providing, via a data transmission unit, a computer which is incorporated in the static/dynamic simultaneous unbalance measuring instrument, with the ground contact length computed from an amount of the tire deformation based on the tire data, the wheel data, the vehicle data, and the tire rigidity stored in the database, inputting the ground length to the computer, or inputting data for computing the ground length to the computer, and comparing the ground length with one third of the total length of the balance weight.

### (3) Step of fixing the rim-assembled tire to the vehicle

The unbalance-corrected rim-assembled tire is first contemporary fixed onto a vehicle. An excitation device is then attached to the tire. The tire is then fixed to the vehicle by tightening up a bolt or a nut while oscillating (vibrating) by the excitation device. Oscillation during fixing the tire improves precision in fixing the tire and thereby minimizes vibration while driving on express ways. Oscillation frequency or oscillation rate may be controlled for each type, including size, of the tire or the wheel.

### (4) Step of adjusting alignment

Vehicle conditions are different even among the vehicles of the same type because the condition under which the vehicle is used is different depending on customers. In an actual vehicle, most parts of the chassis cannot be adjusted. Wheel load is very difficult to be adjusted. To ensure traveling stability of the vehicle and appreciate tire characteristics for the conditions of the tire, a selectable optimum angle of mounting the wheel is obtained and the toe angle of the vehicle is adjusted using an alignment adjusting device.

That is, for each vehicle on which the tire is mounted, vehicle conditions such as wheel load, a camber angle and a caster angle are measured and the toe angle according to the vehicle conditions and the tire conditions is added. Addition of the toe angle provides vehicle stability and minimizes taper wear.

Although the tire and the wheel information is stored in the database in an information center, such information may be stored in a database of an information terminal in a tire dealer.

As described above, in accordance with the apparatus for preparing conditions at tire assembling for a vehicle, and the apparatus for providing the conditions of the present invention, conditions of rim-assembling, conditions of adjusting unbalance, conditions of fixing a rim-assembled tire to a vehicle and conditions of adjusting alignment are obtained for a selected tire and a wheel based on a customer's driving preference. The obtained conditions are then prepared and provided. Therefore the present invention has an effect of preparing or providing the conditions in accordance with the customer's driving preference.

Further, in accordance with the method of tire assembling for a vehicle of the present invention, conditions of rim-assembling, conditions of adjusting unbalance, conditions of fixing a rim-assembled tire to a vehicle and conditions of adjusting alignment are obtained for a selected tire and a wheel based on a customer's driving preference, and the rim-assembled tire is fixed to the vehicle based on the obtained conditions. Accordingly, the present invention has an effect of tire assembling for a vehicle in accordance with the customer's driving preference.

## Claims

1. An apparatus for preparing conditions at tire-assembling for a vehicle, the apparatus comprising:
storage means for storing information about a plurality of tires and wheels;
display means for displaying the information about the plurality of tires and wheels stored in the storage means;
input means for inputting information for selection a tire and a wheel from among the tires and wheels displayed on the display means and information about a customer's driving preference; and
preparing means for preparing:
rim-assembling conditions relating to fit between the selected tire and the wheel at rim-assembling of the selected tire and the wheel;
unbalance-adjusting conditions relating to a weight for correcting unbalance of the rim-assembled tire at unbalance-adjusting of the rim-assembled tire;
fix-conditions relating to a process at which the rim-assembled tire is fixed to the vehicle; and
alignment-conditions relating to alignment of the vehicle and the vehicle fixed rim-assembled tire,
based on the information for selecting a tire and a wheel and the information about a customer's driving preference which are input from the input means.

2. The apparatus of claim 1, wherein the rim-assembling conditions include inflating conditions under which a tire (T) and a rim (W) are fitted together by repeating air inflation and deflation at the time of fitting the tire (T) onto the rim (W).

3. The apparatus of claim 1 or 2, wherein unbalance-adjusting conditions under which unbalance is adjusted include a ground contact length (L) of the rim-assembled tire or information used for computing the ground contact length (L), the ground contact length (L) being used when a part of a balance weight (W_{c}, W_{f}, Wᵣ) for correcting unbalance is distributed and attached on the rim so that unbalance that occurs when the rim-assembled tire with the balance weight (W_{c}, W_{f}, Wᵣ) contacts the ground becomes smaller.

4. An apparatus for providing conditions at tire-assembling for a vehicle, the apparatus comprising:
storage means for storing information about a plurality of tires and wheels;
display means for displaying the information about the plurality of tires and wheels stored in the storage means;
input means for inputting information used for selecting a tire and a wheel from among the tires and wheels displayed on the display means and information about a customer's driving preference; and
preparing means for preparing:
rim-assembling conditions relating to fit between the selected tire and the wheel at rim-assembling of the selected tire and the wheel;
unbalance-adjusting conditions relating to a weight for correcting unbalance of the rim-assembled tire at unbalance-adjusting of the rim-assembled tire;
fix-conditions relating to a process at which the rim-assembled tire is fixed to the vehicle; and
alignment-conditions relating to alignment of the vehicle and the vehicle fixed rim-assembled tire,
based on the information for selecting a tire and a wheel and the information about a customer's driving preference which are input from the input means, and providing the obtained conditions.

5. The apparatus of claim 4, wherein the rim-assembling conditions include inflating conditions under which a tire (T) and a rim (W) are fitted together by repeating air inflation and deflation at the time of fitting the tire onto the rim.

6. The apparatus of claim 4 or 5, wherein unbalance-adjusting conditions include a ground contact length (L) of the rim-assembled tire or information used for computing the ground contact length (L), the ground contact length (L) being used for providing a balance weight (W_{c}, W_{f}, Wᵣ) with a part of which being distributed so that unbalance that occurs when the rim-assembled tire with the balance weight (W_{c}, W_{f}, Wᵣ) for correcting the unbalance contacts the ground becomes smaller.

7. A method of tire-assembling for a vehicle, comprising the steps of:
displaying information (112) about a plurality of tires and wheels on an information terminal to allow a customer to select a tire and a wheel, and obtaining the customer's driving preference;
obtaining (122):
rim-assembling conditions relating to fit between the selected tire and the wheel at rim-assembling of the selected tire and the wheel;
unbalance-adjusting conditions relating to a weight for correcting unbalance of the rim-assembled tire at unbalance-adjusting of the rim-assembled tire;
fix-conditions relating to a process at which the rim-assembled tire is fixed to the vehicle; and
alignment-conditions relating to alignment of the vehicle and the vehicle fixed rim-assembled tire,
based on the selected tire and wheel and the obtained customer's driving preference, and
assembling a tire and a wheel in accordance with the rim-assembling conditions, adjusting unbalance of the rim-assembled tire in accordance with the unbalance-adjusting conditions, fixing the unbalance-corrected rim-assembled tire to the vehicle in accordance with the fix-conditions, and adjusting alignment of the vehicle in accordance with the alignment-conditions.

8. The method of claim 7, wherein the rim-assembling conditions include inflating conditions under which a tire (T) and a rim (W) are fitted together by repeating air inflation and deflation at the time of fitting the tire onto the rim.

9. The method of claim 7 or 8, wherein, when adjusting alignment, a rim-assembled tire is set in the static/dynamic simultaneous unbalance measuring instrument and rotated, the amount of the unbalance-correction and the position of the unbalance correction is provided on the circumferential end surface of the rim are measured, and a part of a balance weight is distributed and attached on the rim so that unbalance that occurs when the rim-assembled tire with the balance weight having weight corresponding to the amount of unbalance-correction at the determined position on the circumferential end surface of the rim contacts the ground becomes smaller.

## Patentansprüche

1. Vorrichtung zum Vorgeben von Bedingungen bei der Reifenmontage für ein Fahrzeug, wobei die Vorrichtung folgendes aufweist:
- eine Speichereinrichtung zum Speichern von Information über eine Vielzahl von Reifen und Rädern;
- eine Anzeigeeinrichtung zum Anzeigen der information über die Vielzahl von Reifen und Rändern, die in der Speichereinrichtung gespeichert ist;
- eine Eingabeeinrichtung zum Eingeben von Information für die Auswahl eines Reifens und eines Rads aus den Reifen und Rändern, die auf der Anzeigeeinrichtung angezeigt sind, sowie zum Eingeben von Information hinsichtlich der von einem Kunden bevorzugten Fahreigenschaften; und
- eine Vorgabeeinrichtung zum Vorgeben von:
- Felgenmontagebedingungen in bezug auf den Sitz zwischen dem ausgewählten Reifen und dem Rad bei der Felgenmontage des ausgewählten Reifens und des Rads;
- Auswuchtbedingungen in bezug auf ein Gewicht zum Korrigieren von Unwuchten des felgenmontierten Reifens beim Auswuchten des felgenmontierten Reifens;
- Befestigungsbedingungen in bezug auf einen Vorgang, in dem der felgenmontierte Reifen an dem Fahrzeug angebracht wird; und
- Ausrichtbedingungen in bezug auf die Ausrichtung des Fahrzeugs und des an dem Fahrzeug angebrachten, felgenmontierten Reifens,
und zwar auf der Basis der Information zum Auswählen eines Reifens und eines Rads sowie der Information hinsichtlich der von einem Kunden bevorzugten Fahreigenschaften, die von der Eingabeeinrichtung eingegeben werden.

2. Vorrichtung nach Anspruch 1,
wobei die Felgenmontagebedingungen Aufblasbedingungen beinhalten, unter denen ein Reifen (T) und eine Felge (W) aneinander angebracht werden, indem das Aufblasen mit Luft und das Ablassen von Luft zum Zeitpunkt der Anbringung des Reifens (T) auf der Felge (W) wiederholt vorgenommen werden.

3. Vorrichtung nach Anspruch 1 oder 2,
wobei Auswuchtbedingungen, unter denen ein Auswuchten erfolgt, eine Bodenberührungslänge (L) des felgenmontierten Reifens oder für die Berechnung der Bodenberührungslänge (L) verwendete Information beinhalten, wobei die Bodenberührungslänge (L) verwendet wird, wenn ein Teil eines Ausgleichsgewichts (W_{c}, W_{f}, Wᵣ) zum Korrigieren von Unwuchten verteilt und derart an der Felge angebracht wird, daß Unwuchten, die bei Berührung des felgenmontierten Reifens zusammen mit dem Ausgleichsgewicht (W_{c}, W_{f}, Wᵣ) mit dem Boden auftreten, geringer werden.

4. Vorrichtung zum Vorgeben von Bedingungen bei der Reifenmontage für ein Fahrzeug, wobei die Vorrichtung folgendes aufweist:
- eine Speichereinrichtung zum Speichern von Information über eine Vielzahl von Reifen und Rädern;
- eine Anzeigeeinrichtung zum Anzeigen der Information über die Vielzahl von Reifen und Rändern, die in der Speichereinrichtung gespeichert ist;
- eine Eingabeeinrichtung zum Eingeben von Information für die Auswahl eines Reifens und eines Rads aus den Reifen und Rändern, die auf der Anzeigeeinrichtung angezeigt sind, sowie zum Eingeben von Information hinsichtlich der von einem Kunden bevorzugten Fahreigenschaften; und
- eine Vorgabeeinrichtung zum Vorgeben von:
- Felgenmontagebedingungen in bezug auf den Sitz zwischen dem ausgewählten Reifen und dem Rad bei der Felgenmontage des ausgewählten Reifens und des Rads;
- Auswuchtbedingungen in bezug auf ein Gewicht zum Korrigieren von Unwuchten des felgenmontierten Reifens beim Auswuchten des felgenmontierten Reifens;
- Befestigungsbedingungen in bezug auf einen Vorgang, in dem der felgenmontierte Reifen an dem Fahrzeug angebracht wird; und
- Ausrichtbedingungen in bezug auf die Ausrichtung des Fahrzeugs und des an dem Fahrzeug angebrachten, felgenmontierten Reifens,
und zwar auf der Basis der Information zum Auswählen eines Reifens und eines Rads sowie der Information hinsichtlich der von einem Kunden bevorzugten Fahreigenschaften, die von der Eingabeeinrichtung eingegeben werden, sowie die Bereitstellung der ermittelten Bedingungen.

5. Vorrichtung nach Anspruch 4,
wobei die Felgenmontagebedingungen Aufblasbedingungen beinhalten, unter denen ein Reifen (T) und eine Felge (W) aneinander angebracht werden, indem das Aufblasen mit Luft und das Ablassen von Luft zum Zeitpunkt der Anbringung des Reifens auf der Felge wiederholt vorgenommen werden.

6. Vorrichtung nach Anspruch 4 oder 5,
wobei Auswuchtbedingungen eine Bodenberührungslänge (L) des felgenmontierten Reifens oder für die Berechnung der Bodenberührungslänge (L) verwendete Information beinhalten, wobei die Bodenberührungslänge (L) verwendet wird, um ein Ausgleichsgewicht (W_{c}, W_{f}, Wᵣ) vorzusehen, wobei ein Teil von diesem derart verteilt wird, daß Unwuchten, die bei Berührung des felgenmontierten Reifens zusammen mit dem Ausgleichsgewicht (W_{c}, W_{f}, Wᵣ) zum Korrigieren der Unwuchten mit dem Boden auftreten, geringer werden.

7. Verfahren für die Reifenmontage für ein Fahrzeug, wobei das Verfahren folgende Schritte aufweist:
- Anzeigen von Information (112) über eine Vielzahl von Reifen und Rädern an einem Informations-Terminal, so daß ein Kunde einen Reifen und ein Rad auswählen kann, sowie Ermitteln der von dem Kunden bevorzugten Fahreigenschaften unter Ermittlung (112) von
- Felgenmontagebedingungen in bezug auf den Sitz zwischen dem ausgewählten Reifen und dem Rad bei der Felgenmontage des ausgewählten Reifens und des Rads;
- Auswuchtbedingungen in bezug auf ein Gewicht zum Korrigieren von Unwuchten des felgenmontierten Reifens beim Auswuchten des felgenmontierten Reifens;
- Befestigungsbedingungen in bezug auf einen Vorgang, in dem der felgenmontierte Reifen an dem Fahrzeug angebracht wird; und
- Ausrichtbedingungen in bezug auf die Ausrichtung des Fahrzeugs und des an dem Fahrzeug angebrachten, felgenmontierten Reifens,
und zwar auf der Basis des ausgewählten Reifens und des Rads sowie der ermittelten Information hinsichtlich der von dem Kunden bevorzugten Fahreigenschaften, und
- Montieren eines Reifens und eines Rads in Abhängigkeit von den Felgenmontagebedingungen, Auswuchten des felgenmontierten Reifens in Abhängigkeit von den Auswuchtbedingungen, Anbringen des ausgewuchteten, auf der Felge montierten Reifens an dem Fahrzeug in Abhängigkeit von den Befestigungsbedingungen, sowie Einstellen der Ausrichtung des Fahrzeugs in Abhängigkeit von den Ausrichtbedingungen.

8. Verfahren nach Anspruch 7,
wobei die Felgenmontagebedingungen Aufblasbedingungen beinhalten, unter denen ein Reifen (T) und eine Felge (W) aneinander angebracht werden, indem das Aufblasen mit Luft und das Ablassen von Luft zum Zeitpunkt der Anbringung des Reifens auf der Felge wiederholt vorgenommen werden.

9. Verfahren nach Anspruch 7 oder 8,
wobei bei der Ausrichteinstellung ein felgenmontierter Reifen in einem statischen/dynamischen Meßinstrument, das gleichzeitig Unwuchten mißt, angeordnet wird und rotationsmäßig bewegt wird, der Betrag der Unwuchtkorrektur und die Stelle der Unwuchtkorrektur, die sich an der umfangsmäßigen Endfläche der Felge befindet, gemessen werden und ein Teil des Ausgleichsgewichts verteilt und derart an der Felge angebracht wird, daß Unwuchten, die bei Berührung des felgenmontierten Reifens zusammen mit dem Ausgleichsgewicht, welches ein dem Betrag der Unwuchtkorrektur an der bestimmten Stelle an der umfangsmäßigen Endfläche der Felge entsprechendes Gewicht hat, mit dem Boden auftreten, geringer werden.

## Revendications

1. Appareil destiné à préparer des conditions lors de l'assemblage de pneu pour un véhicule, l'appareil comprenant :
des moyens de stockage destinés à stocker des informations concernant une pluralité de pneus et roues ;
des moyens d'affichage destinés à afficher les informations concernant la pluralité de pneus et roues stockées dans les moyens de stockage ;
des moyens d'entrée destinés à entrer des informations pour la sélection d'un pneu et une roue parmi les pneus et roues affichés sur les moyens d'affichage et des informations concernant la préférence de conduite d'un client ; et
des moyens de préparation destinés à préparer :
des conditions d'assemblage sur jante concernant l'ajustement entre le pneu sélectionné et la roue lors de l'assemblage sur jante du pneu sélectionné et la roue ;
une conditions d'ajustement de déséquilibre concernant un poids pour corriger le déséquilibre du pneu assemblé sur jante lors de l'ajustage de déséquilibre du pneu assemblé sur jante ;
des conditions de fixation concernant un processus lors duquel le pneu assemblé sur jante est fixé au véhicule ; et
des conditions d'équilibrage concernant l'équilibrage du véhicule et le pneu fixé assemblé sur jante de véhicule,
sur la base des information pour sélectionner un pneu et une roue et des informations concernant la préférence de conduite d'un client qui sont entrées à partir des moyens d'entrée.

2. Appareil selon la revendication 1, dans lequel les conditions d'assemblage sur jante comprennent des conditions de gonflage dans lesquelles un pneu (T) et une jante (W) sont assemblés en répétant un gonflage et dégonflage d'air au moment de l'installation du pneu (T) sur la jante (W).

3. Appareil selon la revendication 1 ou 2, dans lequel des conditions d'ajustement de déséquilibre dans lesquelles le déséquilibre est ajusté comprennent une longueur de contact avec le sol (L) du pneu assemblé sur jante ou des informations utilisées pour calculer la longueur de contact avec le sol (L), la longueur de contact avec le sol (L) étant utilisée lorsqu'une partie d'un poids d'équilibrage (W_{c}, W_{f}, Wᵣ) pour corriger le déséquilibre est distribuée et attachée sur la jante de sorte que le déséquilibre qui se produit lorsque le pneu assemblé sur jante avec le poids d'équilibrage (W_{c}, W_{f}, Wᵣ) entre en contact avec le sol se réduise.

4. Appareil destiné à fournir des conditions lors de l'assemblage de pneu pour un véhicule, l'appareil comprenant :
des moyens de stockage destinés à stocker des informations concernant une pluralité de pneus et roues ;
des moyens d'affichage destinés à afficher les informations concernant la pluralité de pneus et roues stockées dans les moyens de stockage ;
des moyens d'entrée destinés à entrer des informations utilisées pour sélectionner un pneu et une roue parmi les pneus et roues affichés sur les moyens d'affichage et des informations concernant la préférence de conduite d'un client ; et
des moyens de préparation destinés à préparer :
des conditions d'assemblage sur jante concernant l'ajustement entre le pneu sélectionné et la roue lors de l'assemblage sur jante du pneu sélectionné et de la roue ;
des conditions d'ajustement de déséquilibre concernant un poids pour corriger le déséquilibre du pneu assemblé sur jante lors de l'ajustage de déséquilibre du pneu assemblé sur jante ;
des conditions de fixation concernant un processus lors duquel le pneu assemblé sur jante est fixé au véhicule ; et
des conditions d'équilibrage concernant l'équilibrage du véhicule et le pneu fixé assemblé sur jante de véhicule,
sur la base des informations pour sélectionner un pneu et une roué et des informations concernant la préférence de conduite d'un client qui sont entrées à partir des moyens d'entrée, et fournir les conditions obtenues.

5. Appareil selon la revendication 4, dans lequel les conditions d'assemblage sur jante comprennent des conditions de gonflage dans lesquelles un pneu (T) et une jante (W) sont assemblés en répétant un gonflage et dégonflage d'air au moment de l'installation du pneu sur la jante.

6. Appareil selon la revendication 4 ou 5, dans lequel des conditions d'ajustement de déséquilibre comprennent une longueur de contact avec le sol (L) du pneu assemblé sur jante ou des informations utilisées pour calculer la longueur de contact avec le sol (L), la longueur de contact avec le sol (L) étant utilisée pour fournir un poids d'équilibrage (W_{c}, W_{f}, Wᵣ), une partie duquel étant distribuée de sorte que le déséquilibre qui se produit lorsque le pneu assemblé sur jante avec le poids d'équilibrage (W_{c}, W_{f}, Wᵣ) pour corriger le déséquilibre entre en contact avec le sol se réduise.

7. Procédé d'assemblage de pneu pour un véhicule, comprenant les étapes consistant à :
afficher des informations (112) concernant une pluralité de pneus et roues sur un terminal d'informations pour permettre à un client de sélectionner un pneu et une roue, et obtenir la préférence de conduite du client ;
obtenir (122) :
des conditions d'assemblage sur jante concernant l'ajustement entre le pneu sélectionné et la roue lors de l'assemblage sur jante du pneu sélectionné et de la roue ;
des conditions d'ajustement de déséquilibre concernant un poids pour corriger le déséquilibre du pneu assemblé sur jante lors de l'ajustage de déséquilibre du pneu assemblé sur jante ;
des conditions de fixation concernant un processus lors duquel le pneu assemblé sur jante est fixé au véhicule ; et
des conditions d'équilibrage concernant l'équilibrage du véhicule et le pneu fixé assemblé sur jante de véhicule,
sur la base du pneu sélectionné et de la roue et de la préférence de conduite du client obtenue, et
assembler un pneu et une roue selon les conditions d'assemblage sur jante, ajuster le déséquilibre du pneu assemblé sur jante selon les conditions d'ajustement de déséquilibre, fixer le pneu assemblé sur jante à déséquilibre corrigé au véhicule selon les conditions de fixation, et ajuster l'équilibrage du véhicule selon les conditions d'équilibrage.

8. Procédé selon la revendication 7, dans lequel les conditions d'assemblage sur jante comprennent des conditions de gonflage dans lesquelles un pneu (T) et une jante (W) sont assemblés en répétant un gonflage et dégonflage d'air au moment de l'installation du pneu sur la jante.

9. Procédé selon la revendication 7 ou 8, dans lequel, lors de l'ajustage d'équilibrage, un pneu assemblé sur jante est placé dans l'instrument de mesure de déséquilibre simultané statique/dynamique et tourné, la quantité de la correction de déséquilibre et la position de la correction de déséquilibre qui est prévue sur la surface d'extrémité circonférentielle de la jante sont mesurées, et une partie d'un poids d'équilibrage est distribuée et attachée sur la jante de sorte que le déséquilibre qui se produit lorsque le pneu assemblé sur jante avec le poids d'équilibrage ayant un poids correspondant à la quantité de correction de déséquilibre au niveau de la position déterminée sur la surface d'extrémité circonférentielle de la jante entre en contact avec le sol se réduise.
